Europäisches Patentamt

European Patent Office

Office européen des brevets

(19)

(11) Publication number: **0 196 452**
B1

# EUROPEAN PATENT SPECIFICATION

(12)

(45) Date of publication of the patent specification:
20.06.90

(51) Int. Cl.⁵: **A01N 43/80**, A01N 43/38,
A01N 37/34
// (A01N43/80, 43:80,
37:34),(A01N43/38,
37:34),(A01N37/34, 37:34, 35:02,
33:20, 33:08)

(21) Application number: 86102435.4

(22) Date of filing: 25.02.86

(54) Synergistic antimicrobial admixtures containing 2-bromo-2-bromo methylglutaronitrile, process for inhibiting microbial growth and substrates protected against microbial growth.

(30) Priority: 04.03.85 US 708193
27.03.85 US 716414
27.03.85 US 716415

(43) Date of publication of application:
08.10.86 Bulletin 86/41

(45) Publication of the grant of the patent:
20.06.90 Bulletin 90/25

(84) Designated Contracting States:
AT BE CH DE FR GB IT LI LU NL SE

(56) References cited:
EP-A- 0 094 721
EP-A- 0 098 410
DE-A- 3 144 137
US-A- 3 833 731
US-A- 4 163 795
US-A- 4 165 318

CHEMICAL ABSTRACTS, vol. 95, no. 15,
October 12, 1981, page 182, ref. no. 127419k; Columbus,
Ohio, US

(73) Proprietor: CALGON CORPORATION,
Route 60-Campbell's Run Road, Robinson Township
Pennsylvania 15205(US)

(72) Inventor: Jakubowski, John A., 5 Winterberry Circle,
Piscataway, N.J. 08854(US)

(74) Representative: Blum, Rudolf Emil Ernst et al, c/o E.
Blum & Co Patentanwälte Vorderberg 11,
CH-8044 Zürich(CH)

**Description**

BACKGROUND OF THE INVENTION

U.S. patents 3 833 731; 3 877 922; 3 873 597; 3 644 380; 3 833 743 and 3 929 858 disclose 2-bromo-2-bromomethylglutaronitrile and its use as an antibacterial, antifungal, and algicidal agent.

Furthermore there are described in the U.S. patent 4 163 795 antimicrobial compositions which contain as active ingredient an α-halogenated amide, like the 2,2-dibromo-3-nitrilopropion-amide.

It was now quite unexpectedly found out that the 2-bromo-2-bromomethylglutaronitrile coacts synergistically with the 2,2-dibromo-nitrilopropion-amide, if said two substances are used as antimicrobial agents.

DESCRIPTION OF THE PRIOR ART

In the U.S. patent 3 833 731 there are described antibacterial and antifungal agents which are 2-halo-2-halomethylglutaronitriles, preferably the 2-bromo-2-bromomethylglutaronitrile. There is explained that said compounds have an antimicrobial activity against several kinds of bacteria and several kinds of fungi and that said compounds may be also used to control overgrowth of algae.

Furthermore synergistic antimicrobial combinations are known in the art in which one of the components which coacts synergistically with another component is the 2-bromo-2-bromomethylglutaronitrile. For instance in the European patent publication 0 098 410 there is described a synergistic antimicrobial combination, in which the 2-bromo-2-bromomethylglutaronitrile coacts synergistically with sulphur containing heterocyclic compounds which are selected from the group comprising 1,2-benz-isothiazolin-3-one and tetrahydro-3,5-dimethyl-2H-1,3,5-thiadiazine-2-thione.

In Chemical Abstracts, vol. 95, 1981, page 182, abstract 127 419k there are described industrial preservatives having an bactericidal and fungicidal activity, which contain as active ingredient the 1,2-dibromo-2,4-dicyano-butane (i.e. the 2-bromo-2-bromomethylglutaronitrile) and furthermore the diiodomethyl-t-toluylsulfone.

In the German Offenlegungsschrift 3 144 137 there are described desinfecting agents for the desinfection of areas which are based on dialdehydes and said desinfection agents contain a further component having a strong bacteriostatic activity. On page 4, lines 21 and 22 of said publication there is mentioned as example for said second component the 1,2-dibromo-2,4-dicyanobutane, i.e. the 2-bromo-2-bromomethylglutaronitrile.

As already mentioned before it is well known in the art, that the second component of the inventive synergistical antimicrobial admixture has an antimicrobial activity. For instance, there are described in the U.S. patent 4 163 795 stabilized aqueous antimicrobial compositions having an acidic pH of about 2–5 which comprise the following components:

1. an α-halogenated amide, which is for instance 2,2-dibromo-3-nitrilopropion-amide,
2. a water miscible organic solvent,
3. water and
4. a stabilizing amount of an azine or a nitrile stabilizer which is different from the α-halogenated amide antimicrobial compound.

The nitrile stabilizers disclosed in said U.S. patent are saturated aliphatic compounds or saturated alicyclic compounds which contain the nitrile group. As example for the aliphatic nitrile there is mentioned in column 6, line 29, a not brominated dinitrile, i.e. the succinonitrile.

It was now unexpectedly found out that the well known antimicrobial agent 2-bromo-2-bromomethylglutaronitrile coacts synergistically with the as well already known antimicrobial agent 2,2-dibromo-3-nitrilopropion-amide.

DESCRIPTION OF THE INVENTION

The present invention concerns synergistic antimicrobial admixtures which comprise:

(a) 2-bromo-2-bromomethylglutaronitrile, thereinafter also abbreviated as "BBMG" and furthermore
(b) 2,2-dibromo-3-nitrilopropion-amide, hereinafter also abbreviated as "DBNPA".

A further object of the present invention is a process for inhibiting microbial growth, which process is characterized in that the microbial growth or areas where the microbial growth shall be inhibited, are contacted with:

(a) 2-bromo-2-bromomethylglutaronitrile and furthermore with
(b) 2,2-dibromo-3-nitrilopropion-amide.

A further object of the present invention is a substrate which is protected against microbial growth and which is characterized in that it contains in an antimicrobial effective amount of:

(a) 2-bromo-2-bromomethylglutaronitrile and furthermore
(b) 2,2-dibromo-3-nitrilopropion-amide.

As used herein, the phrases "antimicrobial" and "inhibiting microbial growth" describe the killing of, as well as the inhibition of or control of the growth of bacteria, yeasts, fungi, and algae. A number of important industries can experience serious adverse effects from the activity of such bacteria and fungi on the raw materials which they employ, on various aspects of their manufacturing activities, or on the finished products which they produce. Such industries include the paint, wood, textile, cosmetic, leather, tobacco, fur, rope, paper, pulp, plastics, fuel, oil, rubber, and machine industries. Important applications of the synergistic antimicrobial combinations of the present invention include: inhibiting the growth of bacteria and fungi in aqueous paints, adhesives, latex emulsions, and joint cements; preserving wood; preserving cutting oils; controlling slime-producing bacteria and fungi in pulp and paper mills and cooling towers; as a spray or dip treatment for textiles and leather to prevent mold growth; as a component of anti-fouling paints to prevent adherence of fouling organisms; protecting paint films, especially exterior paints, from attack by fungi which occurs during weathering of the paint film; protecting processing equipment from slime deposits during manufacture of cane and beet sugar; preventing microorganism buildup and deposits in air washer or scrubber systems and in industrial fresh water supply systems; controlling microorganism contamination and deposits in oil field drilling fluids and muds, and in secondary petroleum recovery processes; preventing bacterial and fungal growth in paper coating processes which might adversely affect the quality of the paper coating; controlling bacterial and fungal growth and deposits during the manufacture of various specialty boards, e.g., cardboard and particle board; preventing sap stain discoloration on freshly cut wood of various kinds; controlling bacterial and fungal growth in clay and pigment slurries of various types which are manufactured for later use in paper coating and paint manufacturing for example, and which are susceptible to degradation by microorganisms during storage and transport; as a hard surface disinfectant to prevent growth of bacteria and fungi on walls, floors, etc.; and in swimming pools to prevent algae growth. The control of bacteria and fungi in pulp and paper mill water systems which contain aqueous dispersions of papermaking fibers is especially important. The uncontrolled buildup of slime produced by the accumulation of bacteria and fungi causes offgrade production, decreased production due to breaks and greater cleanup frequency, increased raw material usage, and increased maintenance costs. The problem of slime deposits has been aggravated by the widespread use of closed white water systems in the paper industry.

Another important area where control of bacterial and fungal growth is vital is in clay and pigment slurries. These slurries are of various clays, e.g. kaolin, and pigments, e.g. calcium carbonate and titanium dioxide, and are manufactured usually at a location separate from the end use application, in for example, paper coating and paint manufacturing, and are then stored and held for later transport to the end use location. Because of the high quality standards for the paper and paint final products in which the slurry is used, it is essential that the clay or pigment slurry has a very low microorganism count or content so that it is usable in the paper coating or paint manufacturing.

The synergistic antimicrobial combinations of the present invention may also be utilized for agricultural and animal health applications, for example in preventing or minimizing the growth of harmful bacteria, yeasts, and/or fungi on plants, trees, fruit, seeds, or soil. The synergistic combinations are especially useful in treating seed to prevent microorganism, particularly fungal attack. The synergistic combinations are also useful in protecting animal dip compositions against the buildup of microorganisms, and for this purpose may be combined with a veterinary animal dip parasiticide and an acceptable carrier.

The synergistic combinations of the present invention have been found especially useful in controlling the harmful effects of microorganisms in water or aqueous media. Systems which utilize circulating water or aqueous media become infected with microorganisms and experience substantial impairment of their efficiency when deposits of the microorganisms build up in the system. The deposits, called slimes, coat the walls of tanks and other vessels, and any machinery or processing equipment which is employed, and create blockages in pipes and valves. The slimes also create discolorations and other imperfections in any products being produced, forcing costly shutdowns. Control of microorganisms in aqueous media is particularly important where there are dispersed particles or fines in the aqueous media, e.g., dispersed cellulosic fibers and dispersed fillers and pigments in papermaking, and dispersed pigments in paint manufacture.

The proportions of the two components of the synergistic combinations are dictated by the dosage levels of each component, based on 100% active ingredient, which will be employed in each end use application. The recommended dosage levels are described in detail below.

The synergistic antimicrobial combination of active ingredients of the antimicrobial compositions of the present invention may be used in diverse formulations: solid, including finely divided powders and granular materials; as well as liquid, such as solutions, emulsions, suspensions, concentrates, emulsifiable concentrates, slurries and the like, depending upon the application intended, and the formulation media desired. Further, when the synergistic antimicrobial combination is liquid, it may be employed neat or may be incorporated into various formulations, both solid and liquid, as and adsorbate on suitable inert carriers such as talc, clays, diatomaceous earth and the like.

Thus, it will be appreciated that the synergistic antimicrobial combinations may be employed to form antimicrobial formulations containing the combination as the essential active ingredient, which formulations may also contain a variety of carrier materials adaptable to industrial and agricultural applications including finely divided dry or liquid diluents, extenders, clays, diatomaceous earth, talc and the like, or water and various organic liquids such as loweralkanols, kerosene, benzene, toluene and other petroleum distillate fractions or mixtures thereof.

It will be understood also that the synergistic antimicrobial combination of active ingredients may be used in combination with other antimicrobial materials. For example, the combination can be combined with other fungicides and bactericides such as 2-(4'-thiazolyl)benzimidazole, sorbic acid, propionic acid, mycostatin, sodium diacetate, trichomycin, amphotericin, griseofulvin, undecylenic acid, esters of parahydroxybenzoic acid, chlorguinaldol, 5,7-dichloro-8-hydroxyquinoline, sodium-o-phenylphenate, o-phenylphenol, biphenyl, chlorinated phenols, sodium benzoate in appropriate concentrations and in appropriate instances so as to combine the action of each to obtain particularly useful results. Such combinations might find particular application in the preparation of germicidal soaps, in the production of cosmetics and aqueous coatings and in combatting paper mill slime accumulations. It is quite clear also that the synergistic antimicrobial combination can be combined with other algicidal agents such as benzalkonium chlorides and other quaternary ammonium compounds to obtain formulations particularly suitable to special problems of algae control.

In accordance with the present invention there is still further provided a method of inhibiting the growth of at least one of: bacteria, yeast, fungi, and algae, comprising contacting said bacteria, yeast, fungi, or algae, with a bactericidally, fungicidally, or algicidally effective amount of a synergistic antimicrobial combination comprising BBMG and DBNPA.

The antimicrobial methods of treatment of the present invention involve contacting the microorganisms involved with any of described synergistic antimicrobial combinations. This can be accomplished either by simple addition of the components of any combination together as a single composition, or by addition of the components separately. Such separate co-administration can either be at the same time or at different times. The net effect will be the same: the article or system being treated will ultimately have incorporated therein or have applied thereto the desired dosage concentration of each component.

As noted above, the instant invention is based upon the discovery that the synergistic antimicrobial combinations described above are effective in controlling the growth of bacteria, yeast, fungi and algae in a variety of industrial and agricultural applications. It has been found, for example, that the combinations are effective antimicrobials for the destruction or control of soil fungi and bacteria and for the protection of seeds, bulbs and plants. Also, it is an effective algicide in the treatment of pools and ponds, cooling water system and the like. The utility of the synergistic antimicrobial combinations of this invention is shown not only by their activity against bacteria and fungi responsible for stunting growth, and even destruction of many types of crop-producing plants, but also against those causing degradation and deterioration of many types of industrial products including, for example, paper, leather, wood preservation, textiles, aqueous systems such as adhesives, resins, drilling fluids, pigment dispersions and latex paints and oleoresinous coatings whose films are particularly vulnerable to the destructive action of fungi. The large economic losses encountered in paper-making operations caused by the accumulation of bacterial and fungal slimes in various parts of the system can be eliminated to a significant extent by use of the synergistic combinations described herein.

The antimicrobial activity of the synergistic admixtures described above has been confirmed using standard laboratory techniques. They have been found effective, for example, in inhibiting bacteria including Aerobacter aerogenes, Pseudomonas species including fluorescens, stutzeri, and aeruginosa, and Escherichia coli. They have been found effective also against fungi including Penicillium species, Saccharomyces species, Candida species, Fusarium species, Aspergillus species, and Cephalosporium species. Such bacteria and/or fungi commonly are found on cereal and grain products, in clay and pigment slurries, on oils, on fruits and vegetables and on cosmetics, leather, electrical insulation, textiles and numerous other materials capable of supporting their growth. Also, such bacteria and/or fungi may be found on plants, seeds, fur and wood and in soils. Further, they may be used to control overgrowth of algae such as Clorella sp. including C. pyrenoidosa.

As noted above, it has been found that growth of various harmful fungi and bacteria existing in soil is eliminated or limited by use of formulations containing the synergistic antimicrobial combination described herein. The term "soil" as used here is intended to include all media capable of supporting growth of plants and may include humus, sand, manure, compost, artificially created plant growth solutions and the like.

The synergistic antimicrobial combinations described above have activity against bacteria, yeast, fungi, and algae when employed at appropriate levels of concentration and may be used to inhibit growth of these organisms. It will be obvious to those skilled in the art that the required effective concentration will vary with particular organisms and in particular applications. In general, however, effective fungicidal, bactericidal and algicidal response is obtained when the synergistic antimicrobial combination used is employed in concentrations ranging between 10 and 50,000 ppm (parts per million), preferably 100 to 15,000 ppm of BBMG and between 5 and 10,000 ppm, preferably 50 to 10,000 ppm of DBNPA, and in a weight ratio of BBMG:DBNPA of 20:1 to 1:10, preferably 10:1 to 1:5.

Generally, the concentration of DBNPA required for bactericidal activity will be lower than the concentration required for fungicidal activity. The ranges of concentrations recited above reflect this difference.

For other applications of the type described above, amounts of from 0.005 to 0.30% by weight, based on weight of the substrate being treated, of the synergistic antimicrobial combination being used is incorporated into, sprayed onto, used to dip, or otherwise applied to the substrate to be treated in order to prevent growth of bacteria, fungi, yeasts, and algae.

The following tables summarize the dosage ranges for the components of the synergistic antimicrobial combinations of the present invention in various types of end uses:

### TABLE I

| Application | Concentration (ppm) | | Preferred Ratio BBMG: DBNPA or Formaldehyde Donor or Isothiazolin |
|---|---|---|---|
| | BBMG[a] | DBNPA[b] | |
| Metalworking Fluids | 100–1,000 pref. 100–500 | 200–650 pref. 100–500 | 10:1–1:1 pref. 5:1–1:2.5 |
| Latex Paints and Emulsions | 100–1,0000 pref. 250–500 | 200–650 pref. 50–2,000 | 20:1–1:1 pref. 10:1–2.5:1 |
| Clay & Pigment Slurries | 10–250 | 40–100 | |
| Adhesives | 100–1,000 pref. 250–400 | 200–650 pref. 100–250 | 10:1–1:10 pref. 4:1–1:1 |
| Paper Coatings | 50–250 | 40–100 | |
| Wood Preservatives | 1,000–50,000 pref. 1,900–30,000 | 1,900–3,900 pref. 600–10,000 | 10:1–1:1 pref. 3:1 |

[a] BBMG = 2-bromo-2-bromomethylglutaronitrile
[b] DBNPA = 2,2-dibromo-3-nitrilopropionamide

Of course, the precise dosage of the components which will be employed depends upon a number of factors. First, the dosage is indicated in parts per million (ppm), which refers to the concentration of the active ingredient in the environment being treated, for example, the concentration of BBMG in a clay slurry. This concentration is based on 100% active ingredient for convenience in evaluating and comparing test data. In actual practice, however, various percentages of active ingredient may actually be used, with the balance of the composition being added comprising conventional excipients such as dispersants, stabilizers, preservatives, co-solvents, diluents, and the like.

The components of the synergistic antimicrobial combination of the present invention may be added to an article or system to be treated as separate entities, or as a combination. The two components are physically and chemically compatible and may be combined simply as active ingredients, or may additionally be combined with commonly employed carriers and excipients, as described above.

The following examples, which were actually carried out, will serve to further illustrate the present invention, without at the same time, however, constituting any limitation thereof.

EXAMPLES

Aqueous Paint and Adhesive

Biocides were added separately and individually to 50 gram aliquots of the aqueous paint, latex emulsion, and adhesive as shown in Tables 1 and 2. Each aliquot was inoculated with a mixed suspension (approximately $5 \times 10^6$ microorganisms/gram of substrate). The samples were incubated at 28–30°C and were streaked on Sabouraud Maltose agar petri plates at intervals of 24, 48, 72 hours and seven days after inoculation. All plates were incubated at 28–30°C for seven days. The results are reported in Tables I and II.

The microorganisms used in the tests were:

<u>Pseudomonas stutzeri</u>

<u>Pseudomonas fluorescens</u>          bacteria

<u>Pseudomonas aeruginosa</u>

<u>Saccharomyces cerevisiae</u>          yeast

<u>Aspergillus niger</u>          fungi

<u>Penicillium funiculosum</u>

Results are shown in Tables II and III (BBMG and DBNPA).

Metalworking Fluids

Petroleum base soluble and synthetic metalworking fluids were diluted 1 part oil: 40 parts tap water. Biocides were added separately and individually to 300 ml aliquots of each test system. Inoculations of bacteria, yeasts and fungi were made weekly (approximately $5 \times 10^6$ microorganisms/gram of substrate) and the microbial population was analyzed once/week for 105 days (15 weeks) using conventional plate count techniques. Table IV (BBMG and DBNPA) shows the number of days of inhibition provided by the biocides individually and in combination. Plate counts of $10^5$ for two consecutive weeks were considered as failures.

The microorganisms used in the tests were:

<u>Pseudomonas aeruginosa</u>
<u>Pseudomonas fluorescens</u>
<u>Saccharomyces cerevisiae</u>
<u>Candida sp.</u>
<u>Fusarium sp.</u>
<u>Cephalosporium sp.</u>

## TABLE II

### Preservation Properties of Combinations of BBMG and DBNPA in Latex Paint

| Example | | Test Results at Indicated Intervals Following Microbial Inoculation | | | |
|---|---|---|---|---|---|
| | | 24hr | 48hr | 72hr | 7days |
| 1 | 250 ppm BBMG | 4 | 4 | 4 | 4 |
| 2 | 500 ppm BBMG | 4 | 4 | 4 | 4 |
| 3 | 750 ppm BBMG | 4 | 4 | 4 | 3 |
| 4 | 1,000 ppm BBMG | 2 | 1 | 0 | 0 |
| 5 | 1,500 ppm BBMG | 0 | 0 | 0 | 0 |
| 6 | 250 ppm DBNPA | 4 | 4 | 4 | 4 |
| 7 | 500 ppm DBNPA | 4 | 4 | 4 | 4 |
| 8 | 750 ppm DBNPA | 4 | 4 | 4 | 4 |
| 9 | 1,000 ppm DBNPA | 4 | 4 | 4 | 4 |
| 10 | 1,500 ppm DBNPA | 4 | 4 | 4 | 4 |
| 11 | 250 ppm BBMG + 250 ppm DBNPA | 2 | 0 | 0 | 0 |
| 12 | 500 ppm BBMG + 250 ppm DBNPA | 0 | 0 | 0 | 0 |
| 13 | 100 ppm BBMG + 250 ppm DBNPA | 4 | 4 | 4 | 4 |
| 14 | 250 ppm BBMG + 100 ppm DBNPA | 4 | 4 | 4 | 3 |
| 15 | 100 ppm BBMG + 500 ppm DBNPA | 4 | 3 | 3 | 2 |
| 16 | 100 ppm BBMG + 600 ppm DBNPA | 3 | 2 | 0 | 0 |
| 17 | 500 ppm BBMG + 100 ppm DBNPA | 3 | 0 | 0 | 0 |

### Legend

4 = Heavy microbial growth
3 = Moderate microbial growth
2 = Light microbial growth
1 = Trace microbial growth
0 = Sterile; no growth

## TABLE III

### Preservation Properties of Combinations of BBMG and DBNPA in Adhesive

| Example | | Test Results at Indicated Intervals Following Microbial Inoculation | | | |
|---|---|---|---|---|---|
| | | 24hr | 48hr | 72hr | 7days |
| 1 | 100 ppm BBMG | 4 | 4 | 4 | 4 |
| 2 | 250 ppm BBMG | 4 | 4 | 4 | 4 |
| 3 | 600 ppm BBMG | 4 | 4 | 4 | 4 |
| 4 | 750 ppm BBMG | 2 | 2 | 0 | 0 |
| 5 | 1,000 ppm BBMG | 1 | 0 | 0 | 0 |
| 6 | 250 ppm DBNPA | 4 | 4 | 4 | 4 |
| 7 | 500 ppm DBNPA | 4 | 4 | 4 | 4 |
| 8 | 750 ppm DBNPA | 4 | 4 | 4 | 4 |
| 9 | 1,000 ppm DBNPA | 4 | 4 | 2 | 3 |
| 10 | 1,500 ppm DBNPA | 4 | 3 | 1 | 0 |
| 11 | 250 ppm BBMG + 250 ppm DBNPA | 3 | 1 | 0 | 0 |
| 12 | 500 ppm BBMG + 250 ppm DBNPA | 0 | 0 | 0 | 0 |
| 13 | 100 ppm BBMG + 250 ppm DBNPA | 4 | 4 | 4 | 4 |
| 14 | 250 ppm BBMG + 100 ppm DBNPA | 4 | 4 | 4 | 4 |
| 15 | 100 ppm BBMG + 500 ppm DBNPA | 3 | 1 | 0 | 0 |
| 16 | 500 ppm BBMG + 100 ppm DBNPA | 2 | 0 | 0 | 0 |

### Legend

4 = Heavy microbial growth
3 = Moderate microbial growth
2 = Light microbial growth
1 = Trace microbial growth
0 = Sterile, no growth

## TABLE IV

### Preservation Properties of Combinations of BBMG and DBNPA in Metalworking Fluids

| Example | | | Days of Inhibition | |
|---|---|---|---|---|
| | | | Soluble Fluid | Synthetic Fluid |
| 1 | 100 ppm BBMG | | 0 | 0 |
| 2 | 250 ppm BBMG | | 14 | 7 |
| 3 | 500 ppm BBMG | | 56 | 49 |
| 4 | 750 ppm BBMG | | 84 | 63 |
| 5 | 1,000 ppm BBMG | | 105 | 105 |
| 6 | 100 ppm DBNPA | | 0 | 0 |
| 7 | 250 ppm DBNPA | | 0 | 0 |
| 8 | 500 ppm DBNPA | | 14 | 28 |
| 9 | 750 ppm DBNPA | | 28 | 35 |
| 10 | 1,000 ppm DBNPA | | 28 | 28 |
| 11 | 400 ppm BBMG + | 400 ppm DBNPA | 105 | 105 |
| 12 | 100 ppm BBMG + | 250 ppm DBNPA | 35 | 21 |
| 13 | 250 ppm BBMG + | 100 ppm DBNPA | 63 | 70 |
| 14 = | 500 ppm BBMG + | 250 ppm DBNPA | 105 | 105 |
| 15 = | 500 ppm BBMG + | 100 ppm DBNPA | 98 | 91 |
| 16 = | 100 ppm BBMG + | 100 ppm DBNPA | 28 | 14 |
| 17 = | 50 ppm BBMG + | 50 ppm DBNPA | 7 | 0 |

## Claims

1. Synergistic antimicrobial admixture characterized in that it comprises:
(a) 2-bromo-2-bromomethylglutaronitrile and furthermore
(b) 2,2-dibromo-3-nitrilopropion-amide.

2. Admixture according to claim 1, characterized in that it further comprises a carrier.

3. Admixture according to claim 1 or 2, characterized in that it contains
10 to 50,000 ppm of 2-bromo-2-bromomethylglutaronitrile and
5 to 10,000 ppm of 2,2-dibromo-3-nitrilopropion-amide and wherein the weight ratio of said two components is preferably in the range of 20:1 to 10:1.

4. Admixture according to claim 3, characterized in that it contains
100 to 15,000 ppm of 2-bromo-2-bromomethylglutaronitrile and
50–1000 ppm of 2,2-dibromo-3-nitrilopropion-amide.

5. Process for inhibiting microbial growth, characterized in that the microbial growth or areas where the microbial growth shall be inhibited, are contacted with:
(a) 2-bromo-2-bromomethylglutaronitrile and furthermore with
(b) 2,2-dibromo-3-nitrilopropion-amide.

6. Process according to claim 5, characterized in that the microbial growth or the areas where microbial growth shall be inhibited, are contacted with an admixture containing
(a) 2-bromo-2-bromomethylglutaronitrile and furthermore
(b) 2,2-dibromo-3-nitrilopropion-amide.

7. Process according to claim 5, characterized in that the microbial growth or the areas where microbial growth shall be inhibited are contacted separately in any desired sequence with
(a) 2-bromo-2-bromomethylglutaronitrile and
(b) 2,2-dibromo-3-nitrilopropion-amide.

8. Process according to one of the claims 5–7, characterized in that the microbial growth which shall be inhibited is selected from the group consisting of Pseudomonas stutzeri, Pseudomonas fluorescens, Pseudomonas aeruginosa, Saccharomyces cerevisiae, Aspergillus niger, Penicillium funiculosum, Candida sp., Fusarium sp., Cephalosporium sp., Trichoderma viride, Cladosporium herbarum, Aspergillus fumigatus, Pullularia pullulans, Ceratocystis pilifera, Cephaloascus fragrans and mixtures thereof.

9. A substrate, which is protected against microbial growth, characterized in that it contains in an antimicrobial effective amount:
(a) 2-bromo-2-bromomethylglutaronitrile and furthermore
(b) 2,2-dibromo-3-nitrilopropion-amide.


**Patentansprüche**

1. Synergistische antimikrobielle Mischung, dadurch gekennzeichnet, daß sie umfaßt:
(a) 2-Brom-2-brommethylglutarnitril und weiterhin
(b) 2,2-Dibrom-3-nitrilpropionamid.

2. Mischung nach Anspruch 1, dadurch gekennzeichnet, daß sie weiterhin einen Träger umfaßt.

3. Mischung nach Anspruch 1 oder 2, dadurch gekennzeichnet, daß sie
10 bis 50 000 ppm 2-Brom-2-brommethylglutarnitril und 5 bis 10 000 ppm 2,2-Dibrom-3-nitrilpropionamid enthält und das Gewichtsverhältnis dieser zwei Bestandteile vorzugsweise im Bereich von 20:1 bis 10:1 liegt.

4. Mischung nach Anspruch 3, dadurch gekennzeichnet, daß sie
100 bis 15 000 ppm 2-Brom-2-brommethylglutarnitril und 50 bis 1000 ppm 2,2-Dibrom-3-nitrilpropionamid enthält.

5. Verfahren zur Inhibierung mikrobiellen Wachstums, dadurch gekennzeichnet, daß das mikrobielle Wachstum oder Flächen, auf denen das mikrobielle Wachstum inhibiert werden soll, mit
(a) 2-Brom-2-brommethylglutarnitril und weiterhin mit
(b) 2,2-Dibrom-3-nitrilpropionamid
in Berührung gebracht wird.

6. Verfahren nach Anspruch 5, dadurch gekennzeichnet, daß das mikrobielle Wachstum oder die Flächen, auf denen das mikrobielle Wachstum inhibiert werden soll, mit einer Mischung in Berührung gebracht werden, die
(a) 2-Brom-2-brommethylglutarnitril und weiterhin
(b) 2,2-Dibrom-3-nitrilpropionamid
enthält.

7. Verfahren nach Anspruch 5, dadurch gekennzeichnet, daß das mikrobielle Wachstum oder die Flächen, auf denen das mikrobielle Wachstum inhibiert werden soll, getrennt in jeder gewünschten Reihenfolge mit
(a) 2-Brom-2-brommethylglutarnitril und
(b) 2,2-Dibrom-3-nitrilpropionamid
in Berührung gebracht werden.

8. Verfahren nach einem der Ansprüche 5 bis 7, dadurch gekennzeichnet, daß das mikrobielle Wachstum, das inhibiert werden soll, aus der aus Pseudomonas stutzeri, Pseudomonas fluorescens, Pseudomonas aeruginosa, Saccharomyces cerevisiae, Aspergillus niger, Penicillium funiculosum, Candida sp., Fusarium sp., Cephalosporium sp., Trichoderma viride, Cladosporium herbarum, Aspergillus fumigatus, Pullularia pullulans, Ceratocystis pilifera, Cephaloascus fragrans und Mischungen davon bestehenden Gruppe ausgewählt wird.

9. Substrat, welches gegen mikrobielles Wachstum geschützt ist, dadurch gekennzeichnet, daß es
(a) 2-Brom-2-brommethylglutarnitril und weiterhin
(b) 2,2-Dibrom-3-nitrilpropionamid
in antimikrobiell wirksamer Menge enthält.

**Revendications**

1. Mélange antimicrobien synergique caractérisé en ce qu'il comprend :
   (a) le 2-bromo-2-bromométhylglutaronitrile et, en outre
   (b) le 2,2-dibromo-3-nitrilopropion-amide.
2. Mélange selon la revendication 1, caractérisé en ce qu'il comprend en outre un support.
3. Mélange selon la revendication 1 ou 2, caractérisé en ce qu'il contient
   10 à 50 000 ppm de 2-bromo-2-bromométhylglutaronitrile et
   5 à 10 000 ppm de 2,2-dibromo-3-nitrilopropion-amide et où le rapport pondéral desdits deux composants est de préférence dans un intervalle de 20:1 à 10:1.
4. Mélange selon la revendication 3, caractérisé en ce qu'il contient
   100 à 15 000 ppm de 2-bromo-2-bromométhylglutaronitrile et
   50 à 1000 ppm de 2,2-dibromo-3-nitrilopropion-amide.
5. Procédé d'inhibition de la croissance microbienne, caractérisé en ce que la croissance microbienne ou les zones où la croissance microbienne doit être inhibée sont mises en contact avec :
   (a) le 2-bromo-2-bromométhylglutaronitrile et en outre avec
   (b) le 2,2-dibromo-3-nitrilopropion-amide.
6. Procédé selon la revendication 5, caractérisé en ce que la croissance microbienne ou les zones où la croissance microbienne doit être inhibée sont mises en contact avec un mélange contenant
   (a) le 2-bromo-2-bromométhylglutaronitrile et en outre
   (b) le 2,2-dibromo-3-nitrilopropion-amide.
7. Procédé selon la revendication 5, caractérisé en ce que la croissance microbienne ou les zones où la croissance microbienne doit être inhibée sont mises en contact séparément dans n'importe quel ordre avec
   (a) le 2-bromo-2-bromométhylglutaronitrile et
   (b) le 2,2-dibromo-3-nitrilopropion-amide.
8. Procédé selon l'une quelconque des revendications 5-7, caractérisé en ce que la croissance microbienne qui doit être inhibée est choisie dans le groupe constitué par Pseudomonas stutzeri, Pseudomonas fluorescens, Pseudomonas aeruginosa, Saccharomyces cerevisiae, Aspergillus niger, Penicillium funiculosum, Candida sp., Fusarium sp., Cephalosporium sp., Trichoderma viride, Cladosporium herbarum, Aspergillus fumigatus, Pullularia pullulans, Ceratocystis pilifer, Cephaloascus fragrans et leurs mélanges.
9. Substrat qui est protégé contre la croissance microbienne, caractérisé en ce qu'il contient en une quantité antimicrobienne efficace :
   (a) le 2-bromo-2-bromométhylglutaronitrile et en outre
   (b) le 2,2-dibromo-3-nitrilopropion-amide.